# EUROPEAN PATENT APPLICATION

(11) **EP 1 552 873 A1**
(43) Date of publication of application: **13.07.2005**
(21) Application number: 03784559.1
(22) Date of filing: 06.08.2003
(51) Int. Cl.: B01D 53/047

(54) **METHOD OF SEPARATING TARGET GAS**

(30) Priority: 07.08.2002 JP 2002229982
(71) Applicant: SUMITOMO SEIKA CHEMICALS CO., LTD., Kako-gun, Hyogo 675-0145 (JP)
(72) Inventor: SUMIDA, T., Sumitomo Seika Chemicals Co., Ltd., Kako-gun, Hyogo 675-0145 (JP); SASANO, Hiroaki, Sumitomo Seika Chemicals Co., Ltd, Kako-gun, Hyogo 675-0145 (JP); MIYAKE, M., Sumitomo Seika Chemicals Co., Ltd., Kako-gun, Hyogo 675-0145 (JP)
(74) Representative: Hayes, Adrian Chetwynd
(86) International application number: PCT/JP2003/010036
(87) International publication number: WO 2004/014523

(57) **Abstract**

The present invention is a gas separation method using a plurality of adsorption columns packed with an adsorbent. A cycle including a series of steps (adsorption, first pressure reduction, second pressure reduction, desorption, scrubbing, and repressurization) is repeated in each adsorption column. In the adsorption step, a gas mixture (G1) is introduced into a column (A) so as to cause the adsorbent to adsorb unnecessary components, and a product gas (G2) is led outside of the column (Fig. 3A). In the first pressure reduction step, the internal pressure of the column (A) is reduced by lead-out of a gas (G3) (Fig. 4A). In the second pressure reduction step, the internal pressure of the column (A) is further reduced by lead-out of the gas (Fig. 4B). In the desorption step, the unnecessary components are desorbed from the adsorbent and purged from the column (A) (Fig. 4C). In the scrubbing step, introduction of the gas (G3) and purging of the gas (G4) are performed simultaneously (Fig. 5A). In the repressurizing step, the internal pressure of the column (A) is raised by introducing the gas (G3) (Fig. 5B). The gas (G3) that is led out from the column (A) during the first pressure reduction step is introduced into the column (C) during the scrubbing step (Fig. 4A), and the gas (G3) that is led out from the column (A) during the second pressure reduction step is introduced into the column (C) during the repressurizing step (Fig. 4B).

## Description

### TECHNICAL FIELD

The present invention relates to a method of separating a target gas (hydrogen gas, for example) from a gas mixture by means of a pressure swing adsorption method (PSA method).

### BACKGROUND ART

The PSA method is known as one method of separating a target gas such as hydrogen gas from a gas mixture. In the PSA method, a device comprising two to four adsorption columns, for example, packed with an adsorbent is used, and a single cycle comprising an adsorption step, a pressure reduction step, a desorption step, a scrubbing step, a repressurizing step, and so on is repeated in each adsorption column. As disclosed in Japanese Unexamined Patent Application Publication S58-40126, Japanese Unexamined Patent Application Publication H1-63019, Japanese Unexamined Patent Application Publication H8-10551, and so on, various techniques have been developed to improve the purity and recovery rate of the obtained target gas.

For example, a technique is known in which product gas that is led out of an adsorption column during the adsorption step is supplied to another adsorption column that has completed the desorption step as a scrubbing gas in order to scrub the other adsorption column. Further, a technique is known in which the pressure of one adsorption column, which is at high pressure following completion of the adsorption step, is made equal to the pressure of another adsorption column, which is at low pressure following completion of the scrubbing step, so that pressure reduction in the former adsorption column following the adsorption step can be performed simultaneously with pressure rising in the latter adsorption column following the scrubbing step.

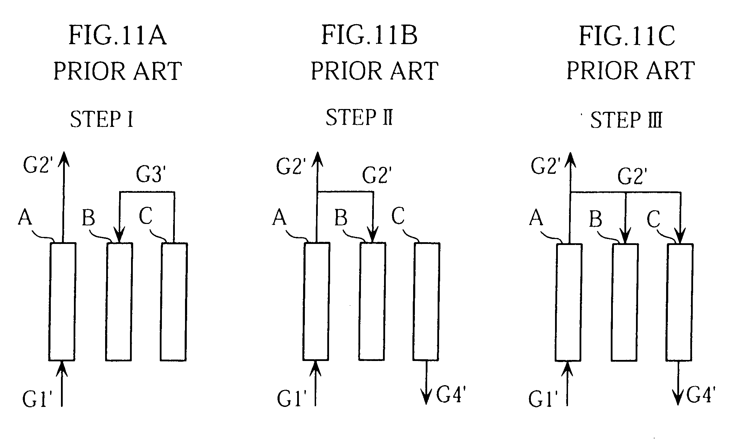

Figs. 11A to 11C, 12A to 12C, and 13A to 13C show the series of steps in a conventional PSA method, including these two techniques. With this method, a device comprising three adsorption columns A, B, C packed with a predetermined adsorbent is used, and a single cycle comprising steps I to IX is repeated.

FIG. 11A shows a step I. In the step I, an adsorption step, a first repressurizing step, and a pressure reduction step are performed in the adsorption columns A, B, C respectively. A gas mixture G1' containing a target gas is introduced into the adsorption column A, where the unnecessary components of the gas mixture G1' are adsorbed by the adsorbent in the column. A target gas-enriched product gas G2' is then led out from the column. The pressure of the adsorption columns B, C is then equalized. More specifically, a gas G3' having a comparatively high target gas concentration is led out from the adsorption column C, which is in a state of high pressure following completion of the adsorption step through a step IX, to be described below, and introduced into the adsorption column B, which is in a state of low pressure following completion of the scrubbing step through the step IX, to be described below. As a result, the internal pressure of the adsorption column C falls, and the internal pressure of the adsorption column B rises.

Fig. 11B shows a step II. In the step II, the adsorption step is performed in the adsorption column A in continuation from the step I, and a second repressurizing step and a desorption step are performed in the adsorption columns B, C respectively. A part of the product gas G2' that is led out from the adsorption column A is introduced into the adsorption column B, whereby the internal pressure of the adsorption column B is raised further. The remaining gas in the adsorption column C is purged from the column as a purge gas G4', and as a result of the pressure reduction which accompanies this purging, the unnecessary components are desorbed from the adsorbent. This desorbed gas is also purged from the column as the purge gas G4'.

Fig. 11C shows a step III. In the step III, the adsorption step is performed in the adsorption column A in continuation from the step II, the second repressurizing step is performed in the adsorption column B in continuation from the step II, and a scrubbing step is performed in the adsorption column C. A part of the product gas G2' led out from the adsorption column A is introduced into the adsorption column C, and the purge gas G4' is purged from the column. As a result, the adsorbent is scrubbed.

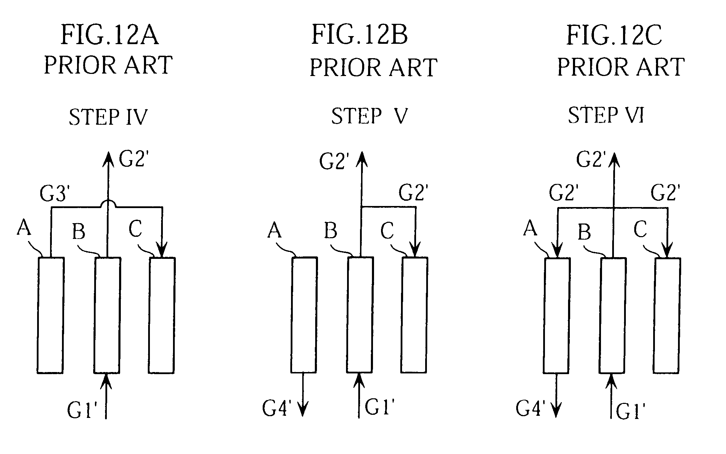

Figs. 12A to 12C show steps IV to VI. In the steps IV to VI, a similar adsorption step to that performed in the adsorption column A in the steps I to III is performed continuously in the adsorption column B, a similar first repressurizing step and second repressurizing step to those performed in the adsorption column B in the steps I to III are performed in succession in the adsorption column C, and similar pressure reduction, desorption, and scrubbing steps to those performed in the adsorption column C in the steps I to III are performed in succession in the adsorption column A.

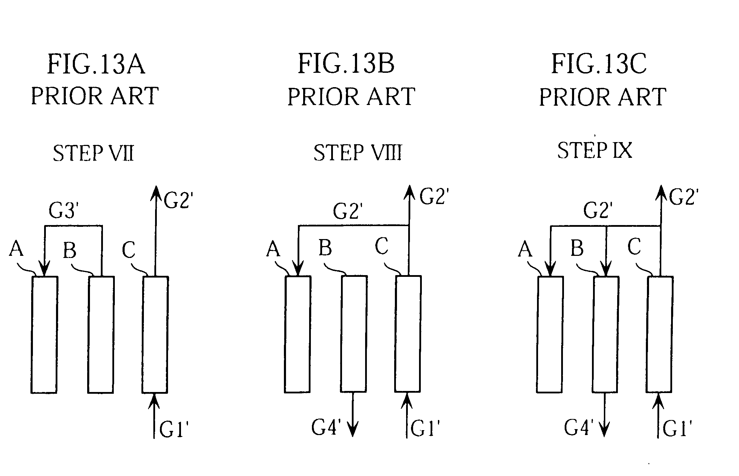

Figs. 13A to 13C show steps VII to IX. In the steps VII to IX, a similar adsorption step to that performed in the adsorption column A in the steps I to III is performed continuously in the adsorption column C, a similar first repressurizing step and second repressurizing step to those performed in the adsorption column B in the steps I to III are performed in succession in the adsorption column A, and similar pressure reduction, desorption, and scrubbing steps to those performed in the adsorption column C in the steps I to III are performed in succession in the adsorption column B.

According to this conventional method, unnecessary components are removed from the gas mixture G1', and the product gas G2' enriched with the target gas is obtained continuously throughout the steps I to IX.

However, with the conventional target gas separation method shown in Figs. 11A through 13C, the gas G3' (having a high target gas concentration in the vicinity of that of the product gas) that exists in the adsorption column following completion of the adsorption step is not used effectively. For example, in the step I, the gas G3' is led from the adsorption column C, following completion of the adsorption step, into the adsorption column B only until the internal pressure of the two columns equalizes, and in the following step II, the significant amount of gas G3' (still having a comparatively high target gas concentration) remaining in the adsorption column C is purged from the device as a part of the gas G4'. The target gas contained in the gas G3' that is introduced into the adsorption column B in the step I is eventually recovered as the product gas G2', but the target gas contained in the gas G4' that is purged from the adsorption column C in the step II is not recovered as the product gas G2', and hence lost. Such target gas loss also occurs in the steps V and VIII.

Moreover, with the conventional target gas separation method shown in Figs. 11A through 13C, only the product gas G2' is used as scrubbing gas for scrubbing the adsorption column following completion of the desorption step, which is wasteful. A significant amount of scrubbing gas is required to scrub the adsorption columns, and hence the amount of target gas loss increases when the product gas G2' alone is used as scrubbing gas. For example, a comparatively large part of the product gas G2' led out from the adsorption column A during the adsorption step of the step III is consumed wastefully to scrub the adsorption column C. Such target gas loss also occurs when scrubbing the adsorption column A in the step VI and the adsorption column B in the step IX.

Hence in the conventional target gas separation method, target gas tends to be lost in comparatively large amounts, and as a result, it is sometimes impossible to achieve a sufficient target gas recovery rate.

### DISCLOSURE OF THE INVENTION

The present invention has been conceived in consideration of such circumstances, and it is an object thereof to provide a target gas separation method according to which a high target gas recovery rate can be achieved with a PSA method.

According to the present invention, a method is provided for separating a target gas from a gas mixture using a plurality of adsorption columns packed with an adsorbent. In this method, a cycle is repeated for each of the adsorption columns, the cycle comprising: an adsorption step in which the gas mixture is introduced into one selected adsorption column, unnecessary components contained in the gas mixture are adsorbed into the adsorbent, and a product gas enriched with the target gas is led out from the adsorption column; a first pressure reduction step for lowering the internal pressure of the adsorption column to a first intermediate pressure by leading out a first led-out gas; a second pressure reduction step for lowering the internal pressure of the adsorption column even further to a second intermediate pressure by leading out a second led-out gas; a desorption step for desorbing the unnecessary components from the adsorbent and purging the unnecessary components; a scrubbing step for introducing a scrubbing gas into the adsorption column and purging a purge gas from the adsorption column; and a repressurizing step for raising the internal pressure of the adsorption column by introducing a repressurizing gas into the adsorption column, is performed repeatedly in each adsorption column. The first led-out gas led out from the adsorption column during the first pressure reduction step is introduced as the scrubbing gas into an adsorption column in which the scrubbing step is underway, and the second led-out gas led out from the adsorption column during the second pressure reduction step is introduced as the repressurizing gas into an adsorption column in which the repressurizing step is underway.

In the prior art relating to a target gas separation method based on a multi-column PSA method, product gas alone is often used as a scrubbing gas for scrubbing the adsorption column and adsorbent in the scrubbing step. This is because, focusing on the regeneration efficiency (scrubbing efficiency) of the adsorbent alone, a product gas with a lower unnecessary component concentration is believed to be more suitable as a scrubbing gas than apre-product gas (having a lower target gas concentration than the product gas) which remains inside the adsorption column following completion of the adsorption step. However, a significant amount of scrubbing gas is required to scrub the adsorption column, and hence if product gas alone is used as the scrubbing gas, the amount of lost target gas increases.

In the prior art, pre-product gas led out from an adsorption column during the pressure reduction step following the adsorption step is sometimes used instead of product gas as a scrubbing gas for scrubbing another adsorption column during the scrubbing step. With this conventional method, however, the pressure reduction step in the former adsorption column is halted at a predetermined, comparatively high pressure, and hence despite the fact that a significant amount of target gas remains in this adsorption column following completion of the pressure reduction step, albeit together with unnecessary components, this remaining target gas is discharged into the atmosphere or the like in the desorption step following the pressure reduction step.

In the adsorption column which is reduced in pressure following the adsorption step, the unnecessary components that were adsorbed into the adsorbent during the adsorption step are desorbed from the adsorbent in an amount which increases gradually as the pressure decreases, and in the prior art, it was believed that the unnecessary component desorption amount becomes excessive at a comparatively high pressure. When gas with an excessively high unnecessary component concentration is used to scrub another adsorption column, the adsorbent in this adsorption column cannot be regenerated and scrubbed sufficiently. Hence in the prior art, even when pre-product gas led out from an adsorption column during the pressure reduction step is used as a scrubbing gas for scrubbing another adsorption column, the pressure reduction step is halted at a predetermined, comparatively high pressure such that in the following desorption step, gas containing a significant amount of target gas is purged from the column. Moreover, further scrubbing must be performed on the scrubbing subject adsorption column using a significant amount of product gas as scrubbing gas. The loss of this significant amount of target gas during the desorption step and the use of a significant amount of product gas as scrubbing gas are undesirable if a high target gas recovery rate is to be achieved.

However, the present inventors have learned that even if the pressure of the adsorption column that is reduced in pressure following the adsorption step is lowered beyond the conventional final pressure of the pressure reduction step, the unnecessary component concentration of the gas that is led out from the adsorption column tends to be held at a comparatively low level. More specifically, even when the unnecessary components are desorbed from the adsorbent by lowering the internal pressure of the adsorption column during the pressure reduction step, the adsorbent in the column remains sufficiently capable of adsorbing unnecessary components, and therefore at least a part of the desorbed gas tends to be readsorbed in a different location of the adsorbent in the same adsorption column. Hence it was learned that even when the pressure of the pressure reduction subject adsorption column is lowered beyond the conventional final pressure of the pressure reduction step, the unnecessary component concentration of the gas that is led out from the adsorption column can be held at a comparatively low level up to a predetermined pressure.

On the basis of this knowledge, in the present invention pre-product gas having a high target gas concentration in the vicinity of that of the product gas, which is led out from the adsorption column during the first pressure reduction step, is introduced into the scrubbing subject adsorption column as scrubbing gas, and pre-product gas still having a high target gas concentration in the vicinity of that of the product gas, which is led out from the adsorption column during the second pressure reduction step following the first pressure reduction step, is introduced into the repressurizing subject adsorption column as repressurizing gas. In so doing, the target gas contained in the gas that is led out from the adsorption column during the first and second pressure reduction steps is used effectively, enabling a high target gas recovery rate to be achieved.

The cycle of this method preferably comprises an additional repressurizing step, performed after the repressurizing step, for raising the internal pressure of the adsorption column further by introducing an additional repressurizing gas into the adsorption column, a part of the product gas led out from the adsorption column in which the adsorption step is underway being introduced as the additional repressurizing gas into the adsorption column in which the additional repressurizing step is underway. Such a design is particularly useful in cases where the internal pressure of the adsorption column in which the repressurizing step is underway is raised by equalizing the pressure of the adsorption column in which the repressurizing step is underway and the adsorption column in which the second pressure reduction step is underway. According to this design, a pressure increase that cannot be achieved through pressure equalization alone can be achieved through the introduction of product gas having a high target gas concentration and high pressure.

The cycle of this method preferably comprises an additional scrubbing step, performed after the scrubbing step, for introducing an additional scrubbing gas into the adsorption column and purging the purge gas from the adsorption column, a part of the product gas led out from the adsorption column in which the adsorption step is underway being introduced as the additional scrubbing gas into the adsorption column in which the additional scrubbing step is underway. Performing scrubbing using product gas in addition to scrubbing using pre-product gas is favorable for improving the regeneration efficiency of the adsorbent.

When the minimum pressure in the adsorption column during the desorption step is assumed to be 0% while the maximum pressure in the adsorption column during the adsorption step is assumed to be 100%, the first intermediate pressure is preferably within a range of 35 to 80%, and more preferably within a range of 35 to 65%. In this case, the second intermediate pressure is preferably within a range of 15 to 50%, and more preferably within a range of 15 to 40%.

According to the present invention, by appropriately modifying the value of the first intermediate pressure or the amount of first led-out gas in the first pressure reduction step, and the value of the second intermediate pressure or the amount of second led-out gas in the second pressure reduction step, the target gas recovery rate can be controlled in a fixed range. For example, when the first pressure reduction step (the scrubbing step in the case of an adsorption column in which the scrubbing step is underway) is performed until the first intermediate pressure of the adsorption column falls to approximately half the adsorption step maximum pressure, and the second pressure reduction step (the repressurizing step in the case of an adsorption column in which the repressurizing step is underway) is performed until the second intermediate pressure of the adsorption column falls to approximately half the first intermediate pressure, it tends to be possible to obtain the maximum recovery rate.

The gas mixture preferably contains hydrogen gas as the target gas and carbon dioxide gas as the unnecessary component. There are no particular limitations on the gas mixture to which the present invention is applied, but it was learned that when the gas mixture contains hydrogen gas as the target gas and carbon dioxide gas as the unnecessary component, the present invention can be applied favorably. In this case, the adsorption step maximum pressure is set within a range of 0.5 to 10MPa (gauge pressure), for example, and the minimum desorption pressure in the desorption step is set between 0 and 500kPa (gauge pressure), for example.

### BRIEF DESCRIPTION OF THE DRAWINGS

Fig. 1 is a view showing schematically illustrating the structure of a PSA separation device for implementing a target gas separation method according to the present invention;
Fig. 2 shows the step that is performed in each adsorption column and the open/closed state of each automatic valve of the PSA separation device shown in Fig. 1 for each step of a target gas separation method according to a first embodiment;
Figs. 3A to 3C show the gas flow condition in steps S1 to S3 of the target gas separation method according to the first embodiment;
Figs. 4A to 4C show the gas flow condition of steps S4 to S6 following the step S3;
Figs. 5A to 5C show the gas flow condition of steps S7 to S9 following the step S6;
Fig. 6 shows the step that is performed in each adsorption column and the open/closed state of each automatic valve of the PSA separation device shown in Fig. 1 for each step of a target gas separation method according to a second embodiment;
Fig. 7 shows the gas flow condition of a step S1' in the target gas separation method according to the second embodiment;
Fig. 8 shows the gas flow condition of a step S4' in the target gas separation method according to the second embodiment;
Fig. 9 shows the gas flow condition of a step S7' in the target gas separation method according to the second embodiment;
Fig. 10 shows pressure relating to a pressure reduction step, and the purity and recovery rate of obtained hydrogen gas, in examples 1 through 4 and a comparative example;
Figs. 11A to 11C show the gas flow condition of steps I to III in a conventional target gas separation method;
Figs. 12A to 12C show the gas flow condition of steps IV to VI following the step III; and
Figs. 13A to 13C show the gas flow condition of steps VII to IX following the step VI.

### BEST MODE FOR CARRYING OUT THE INVENTION

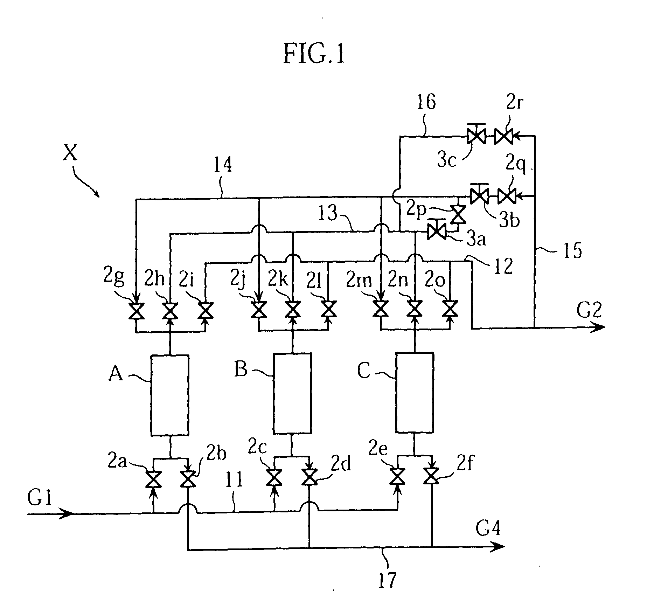

Fig. 1 shows a PSA separation device X for implementing a target gas separation method according to a first embodiment of the present invention. The PSA separation device X comprises three adsorption columns A, B, C, a gas mixture pipe 11, a product gas pipe 12, a pressure reduction pipe 13, a gas introduction pipe 14, product gas backflow pipes 15, 16, and a gas purging pipe 17. In this embodiment, the PSA separation device X is constituted to be capable of separating hydrogen gas by removing unnecessary components from a gas mixture containing hydrogen gas by means of a PSA method.

Each adsorption column A, B, C is packed with an adsorbent. When carbon dioxide gas or methane gas is to be removed as the unnecessary component, a carbon type adsorbent, for example, is employed as the adsorbent. When carbon monoxide or nitrogen gas is to be removed as the unnecessary component, a zeolite type adsorbent, for example, is employed. When water vapor is to be removed as the unnecessary component, an alumina adsorbent, for example, is employed. Either a single type of adsorbent or a plurality of types of adsorbent may be packed into a single adsorption column.

Automatic valves 2a to 2r are provided on the pipes 11 to 17. Flow control valves 3a to 3c are provided on the pipes 13, 14, 16.

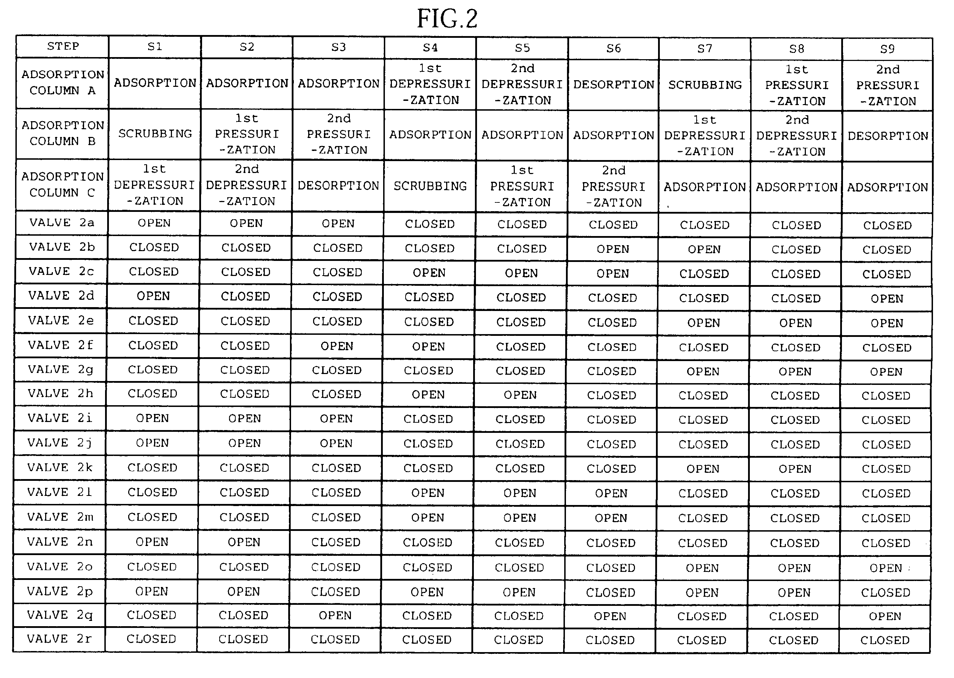

In this embodiment, unnecessary components can be removed from a gas mixture containing hydrogen using the PSA separation device X constituted as described above, by means of the PSA method, and as a result, a hydrogen-enriched product gas, or in other words hydrogen-enriched gas or concentrated hydrogen gas, is obtained. While the PSA separation device X is driven, the automatic valves 2a to 2r are switched appropriately between closed and open states, thereby determining the state of gas flow through the adsorption columns A, B, C and pipes 11 to 17, and a single cycle comprising steps S1 to S9, shown in Fig. 2, is repeated. Focusing on a single adsorption column, an adsorption step, first pressure reduction step, second pressure reduction step, desorption step, scrubbing step, first repressurizing step, and second repressurizing step are performed in succession in a single cycle. Fig. 2 shows the open/closed state of each automatic valve 2a to 2r in each of the steps S1 to S9.

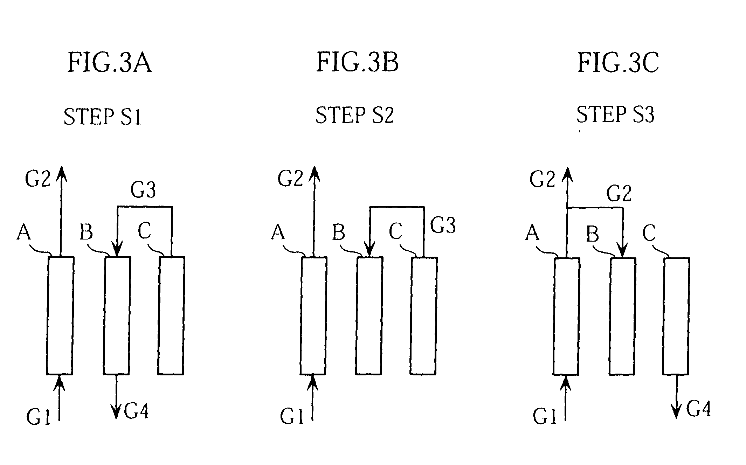

Figs. 3A to 3C, 4A to 4C, and 5A to 5C show the gas flow condition in the PSA separation device X throughout the steps S1 to S9. In these drawings, gas flow is illustrated by the thick line arrows.

In a step S1, the open/closed state of the automatic valves 2a to 2r is selected as shown in Fig. 2 to achieve the gas flow condition shown in Fig. 3A, whereupon the adsorption step, scrubbing step, and first pressure reduction step are performed in the adsorption columns A, B, C respectively.

In the step S1, as can be seen when Figs. 1 and 3A are referenced in conjunction, a gas mixture G1 containing hydrogen gas is introduced into the adsorption column A through the pipe 11 and automatic valve 2a. In the adsorption column A, the unnecessary components contained in the gas mixture G1 are adsorbed by the adsorbent and thus removed, whereupon a gas having a high hydrogen concentration is led out from the column as a product gas G2. The product gas G2 is recovered in a tank, not shown in the drawing, via the automatic valve 2i and the pipe 12.

In the same step, scrubbing gas is supplied from the adsorption column C to the adsorption column B. Morespecifically, a pre-product gas G3 having a comparatively high hydrogen gas concentration is led out from the adsorption column C, which is in a state of high pressure following completion of the adsorption step and a step S9, to be described below, and introduced as scrubbing gas into the adsorption column B, which is in a state of low pressure following completion of the desorption step and the step S9, to be described below, via the automatic valve 2n, pipe 13, flow control valve 3a, automatic valve 2p, pipe 14, and automatic valve 2j. As a result, the internal pressure of the adsorption column C falls to a first intermediate pressure, and a purge gas G4 is purged from the adsorption column B. The purge gas G4 is purged into the atmosphere, for example, through the automatic valve 2d and the pipe 17.

In a step S2, the open/closed state of the automatic valves 2a to 2r is selected as shown in Fig. 2 to achieve the gas flow condition shown in Fig. 3B, whereupon the adsorption step is performed in the adsorption column A in continuation from step S1, and a first repressurizing step and a second pressure reduction step are performed in the adsorption columns B, C respectively.

In the step S2, as can be seen when Figs. 1 and 3B are referenced in conjunction, pressure equalization is realized in the adsorption columns B, C. More specifically, the pre-product gas G3, still having a comparatively high hydrogen gas concentration, is led out from the adsorption column C in continuation from the step S1, and introduced into the adsorption column B as repressurizing gas through the automatic valve 2n, pipe 13, flow control valve 3a, automatic valve 2p, pipe 14, and automatic valve 2j. As a result, the internal pressure of the adsorption column C falls to a second intermediate pressure, and the internal pressure of the adsorption column B rises.

In a step S3, the open/closed state of the automatic valves 2a to 2r is selected as shown in Fig. 2 to achieve the gas flow condition shown in Fig. 3C, whereupon the adsorption step is performed in the adsorption column A in continuation from the step S1, and a second repressurizing step and a desorption step are performed in the adsorption columns B, C respectively.

In the step S3, as can be seen when Figs. 1 and 3C are referenced in conjunction, a part of the product gas G2 from the adsorption column A is introduced into the adsorption column B through the pipe 12, pipe 15, automatic valve 2q, flow control valve 3b, pipe 14, and automatic valve 2j. As a result, the internal pressure of the adsorption column B rises further. In the adsorption column C, which has a decreased internal pressure as a result of the steps S1 and S2, the unnecessary components are desorbed from the adsorbent, and the purge gas G4, mainly containing these unnecessary components, is purged outside of the device from the adsorption column C through the automatic valve 2f and pipe 17.

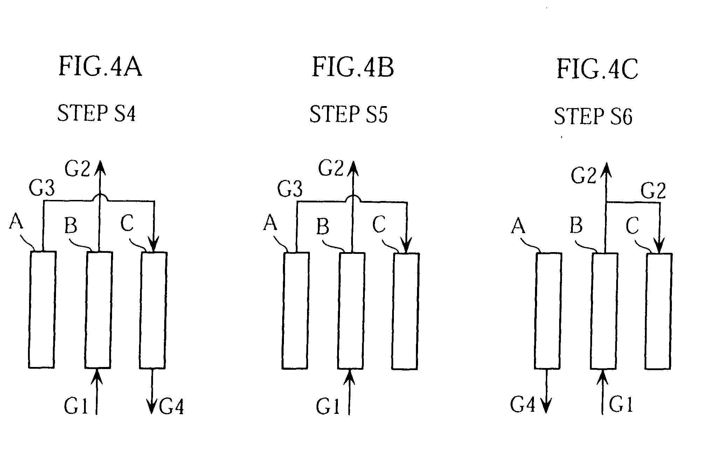

Figs. 4A to 4C show steps S4 to S6. In the steps S4 to S6, a similar adsorption step to that performed in the adsorption column A in the steps S1 to S3 is performed continuously in the adsorption column B, a similar scrubbing step, first repressurizing step, and second repressurizing step to those performed in the adsorption column B in the steps S1 to S3 are performed in succession in the adsorption column C, and a similar first pressure reduction step, second pressure reduction step, and desorption step to those performed in the adsorption column C in the steps S1 to S3 are performed in succession in the adsorption column A.

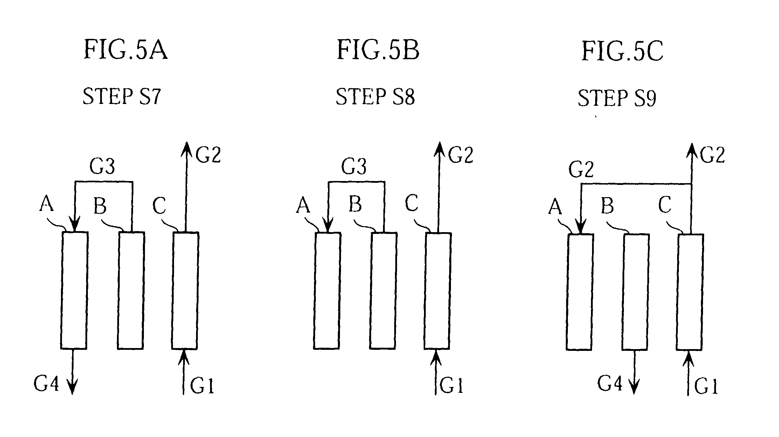

Figs. 5A to 5C show steps S7 to S9. In the steps S7 to S9, a similar adsorption step to that performed in the adsorption column A in the steps S1 to S3 is performed continuously in the adsorption column C, a similar scrubbing step, first repressurizing step, and second repressurizing step to those performed in the adsorption column B in the steps S1 to S3 are performed in succession in the adsorption column A, and a similar first pressure reduction step, second pressure reduction step, and desorption step to those performed in the adsorption column C in the steps S1 to S3 are performed in succession in the adsorption column B.

In a single adsorption column during the series of steps described above, if it is assumed that the minimum pressure in the adsorption column during the desorption step is 0% and the maximum pressure in the adsorption column during the adsorption step is 100%, the first intermediate pressure is preferably set within a range of 35 to 80%, and more preferably within a range of 35 to 65%, and the second intermediate pressure is preferably set within a range of 15 to 50%, and more preferably within a range of 15 to 40%.

According to this method, the target gas-enriched product gas G2 can be obtained continuously throughout the steps S1 to S9 by removing unnecessary components from the gas mixture G1.

In the target gas separation method of the present invention described above, the pre-product gas G3 having a high target gas concentration in the vicinity of that of the product gas, which is led out from the adsorption column during the first pressure reduction step, is introduced into the scrubbing subj ect adsorption column as scrubbing gas, and the pre-product gas G3 still having a high target gas concentration in the vicinity of that of the product gas, which is led out from the adsorption column during the second pressure reduction step following the first pressure reduction step, is introduced into the repressurizing subject adsorption column as repressurizing gas. By utilizing the target gas contained in the pre-product gas G3 that is led out from the adsorption column in the first and second pressure reduction steps effectively in this manner, a high target gas recovery rate can be achieved.

The pipe 16, flow control valve 3c, and automatic valve 2r in the PSA separation device X are used in the following embodiment, but not in the method according to this embodiment. Hence when implementing the method according to this embodiment, a device having a structure in which these components are omitted from the PSA separation device X may be used.

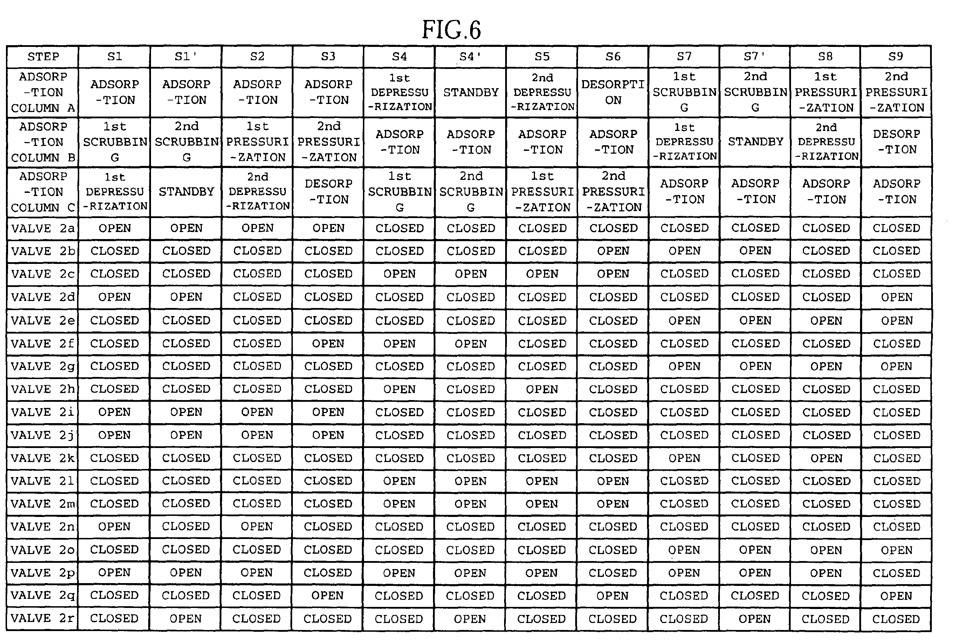

Fig. 6 shows the step that is performed in each adsorption column and the open/closed state of the automatic valves 2a to 2r of the PSA separation device X for each step of a target gas separation method according to a second embodiment, which is implemented using the PSA separation device X. In this embodiment, while the PSA separation device X is driven, the open/closed state of the automatic valves 2a to 2r is switched as shown in Fig. 6, thereby determining the state of gas flow in the adsorption columns A, B, C and the pipes 11 to 17, and a single cycle comprising steps S1 to S9, shown in Fig. 6, is repeated. Focusing on a single adsorption column, an adsorption step, first pressure reduction step, second pressure reduction step, desorption step, first scrubbing step, second scrubbing step, first repressurizing step, and second repressurizing step are performed in succession in a single cycle.

The method according to this embodiment differs substantially from the method according to the first embodiment in that a step S1' is added between the steps S1 and S2, a step S4' is added between the steps S4 and S5, and a step S7' is added between the steps S7 and S8.

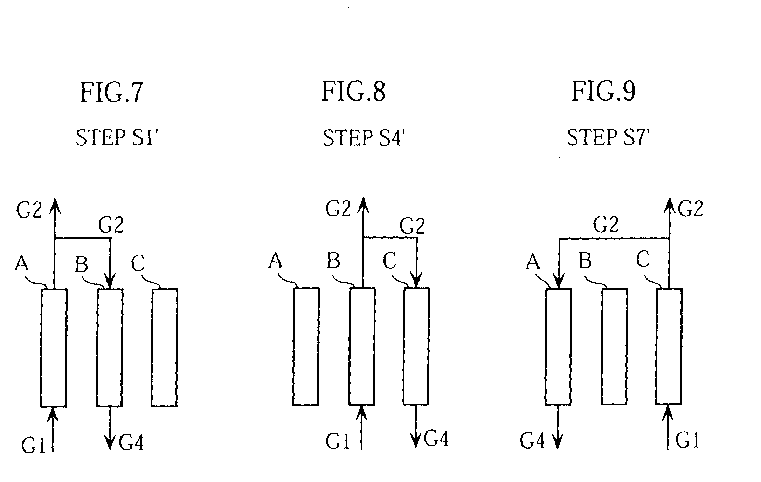

In the step S1', the open/closed state of the automatic valves 2a to 2r is selected as shown in Fig. 6 to achieve the gas flow condition shown in Fig. 7.

In this step, which follows the step S1 shown in Fig. 3A, the adsorption step is performed in the adsorption column A in continuation from the step S1. A further scrubbing step (second scrubbing step) is performed in the adsorption column B following completion of the scrubbing step (first scrubbing step) performed in the step S1. More specifically, as can be seen by referencing Figs. 1 and 7 in conjunction, a part of the product gas G2 from the adsorption column A is introduced into the adsorption column B through the automatic valve 2i, pipe 12, pipe 15, automatic valve 2r, flow control valve 3c, pipe 16, pipe 13, flow control valve 3a, automatic valve 2p, pipe 14, and automatic valve 2j. At the same time, the purge gas G4 is purged from the adsorption column B. This purge gas G4 is purged outside of the device through the automatic valve 2d and pipe 17. In this step, the adsorption column C is on standby in preparation for the second pressure reduction step in the following step S2, and hence gas does not pass therethrough.

In this step, the second scrubbing step, which uses the product gas G2 as a scrubbing gas, is performed in the adsorption column B in continuation from the first scrubbing step of the step S1, in which the pre-product gas G3 supplied from the adsorption column C in the first pressure reduction step is used as the scrubbing gas. As a result, scrubbing and regeneration of the adsorbent in the adsorption column B is expedited. The flow rate of the product gas G2 used in the second scrubbing step is regulated by the flow control valve 3c in consideration of the packing volume of the adsorbent in the adsorption column B and so on.

In the step S4', the open/closed state of the automatic valves 2a to 2r is selected as shown in Fig. 6 to achieve a gas flow condition such as that shown in Fig. 8.

In this step, which follows the step S4 shown in Fig. 4A, the adsorption step is performed in the adsorption column B in continuation from the step S4. A further scrubbing step (second scrubbing step) is performed in the adsorption column C following completion of the scrubbing step (first scrubbing step) performed in the step S4. More specifically, as can be seen by referencing Figs. 1 and 8 in conjunction, a part of the product gas G2 from the adsorption column B is introduced into the adsorption column C through the automatic valve 21, pipe 12, pipe 15, automatic valve 2r, flow control valve 3c, pipe 16, pipe 13, flow control valve 3a, automatic valve 2p, pipe 14, and automatic valve 2m. At the same time, the purge gas G4 is purged from the adsorption column C. This purge gas G4 is purged outside of the device through the automatic valve 2f and pipe 17. In this step, the adsorption column A is on standby in preparation for the second pressure reduction step in the following step S5, and hence gas does not pass therethrough.

In this step, the second scrubbing step, which uses the product gas G2 as a scrubbing gas, is performed in the adsorption column C in continuation from the first scrubbing step of the step S4, in which the pre-product gas G3 supplied from the adsorption column A in the first pressure reduction step is used as the scrubbing gas. As a result, scrubbing and regeneration of the adsorbent in the adsorption column C is expedited. The flow rate of the product gas G2 used in the second scrubbing step is regulated by the flow control valve 3c in consideration of the packing volume of the adsorbent in the adsorption column C and so on.

In the step S7', the open/closed state of the automatic valves 2a to 2r is selected as shown in Fig. 6 to achieve a gas flow condition such as that shown in Fig. 9.

In this step, which follows the step S7 shown in Fig. 5A, the adsorption step is performed in the adsorption column C in continuation from the step S7. A further scrubbing step (second scrubbing step) is performed in the adsorption column A following completion of the scrubbing step (first scrubbing step) performed in the step S7. More specifically, as can be seen by referencing Figs. 1 and 9 in conjunction, a part of the product gas G2 from the adsorption column C is introduced into the adsorption column A through the automatic valve 2o, pipe 12, pipe 15, automatic valve 2r, flow control valve 3c, pipe 16, pipe 13, flow control valve 3a, automatic valve 2p, pipe 14, and automatic valve 2g. At the same time, the purge gas G4 is purged from the adsorption columnA. This purge gas G4 is purged outside of the device through the automatic valve 2b and pipe 17. In this step, the adsorption column B is on standby in preparation for the second pressure reduction step in the following step S8, and hence gas does not pass therethrough.

In this step, the second scrubbing step, which uses the product gas G2 as a scrubbing gas, is performed in the adsorption column A in continuation from the first scrubbing step of the step S7, in which the pre-product gas G3 supplied from the adsorption column B in the first pressure reduction step is used as the scrubbing gas. As a result, scrubbing and regeneration of the adsorbent in the adsorption column A is expedited. The flow rate of the product gas G2 used in the second scrubbing step is regulated by the flow control valve 3c in consideration of the packing volume of the adsorbent in the adsorption column A and so on.

In a single adsorption column during the series of steps described above, if it is assumed that the minimum pressure in the adsorption column during the desorption step is 0% and the maximum pressure in the adsorption column during the adsorption step is 100%, the first intermediate pressure is preferably set within a range of 35 to 80%, and more preferably within a range of 35 to 65%, and the second intermediate pressure is preferably set within a range of 15 to 50%, and more preferably within a range of 15 to 40%.

According to this method, the target gas-enriched product gas G2 can be obtained continuously throughout the steps S1 to S9 by removing unnecessary components from the gas mixture G1.

In the target gas separation method described above, the pre-product gas G3 having a high target gas concentration in the vicinity of that of the product gas, which is led out from the adsorption column during the first pressure reduction step, is introduced into the scrubbing subject adsorption column as scrubbing gas, and the pre-product gas G3 still having a high target gas concentration in the vicinity of that of the product gas, which is led out from the adsorption column during the second pressure reduction step following the first pressure reduction step, is introduced into the repressurizing subject adsorption column as repressurizing gas. By utilizing the target gas contained in the pre-product gas G3 that is led out from the adsorption column in the first and second pressure reduction steps effectively in this manner, a high target gas recovery rate can be achieved.

Moreover, in this method, scrubbing by means of the product gas G2 is implemented in the adsorption columns A, B, C in addition to scrubbing by means of the pre-product gas G3, and hence the regeneration efficiency of the adsorbent in the adsorption columns A, B, C tends to be high.

### [Example 1]

Hydrogen gas was separated from a gas mixture containing hydrogen by repeating the single cycle comprising the steps shown in Figs. 2 and 3A through 5C using the PSA separation device X shown in Fig. 1. This example corresponds to the first embodiment.

In this example, each adsorption column has a cylindrical form with a diameter of 50mm. Each adsorption column was packed with 2.935 liters of a mixture containing a zeolite molecular sieve (Ca5A type) and a carbon molecular sieve at a volume ratio of 1:1.3. A gas mixture containing 77.77vol% hydrogen gas, 19.62vol% carbon dioxide gas, 1vol% carbon monoxide gas, and 1.61vol% methane gas was used. This gas mixture was supplied to the PSA separation device X at a velocity of 851NL/hr. The maximum pressure in the adsorption column during the adsorption step was set at 850kPa (gauge pressure), the final pressure in the adsorption column during the first pressure reduction step was set at 650kPa (gauge pressure), the final pressure in the adsorption column during the second pressure reduction step was set at 325kPa (gauge pressure), and the minimum pressure in the adsorption column during the desorption step was set at 6kPa (gauge pressure).

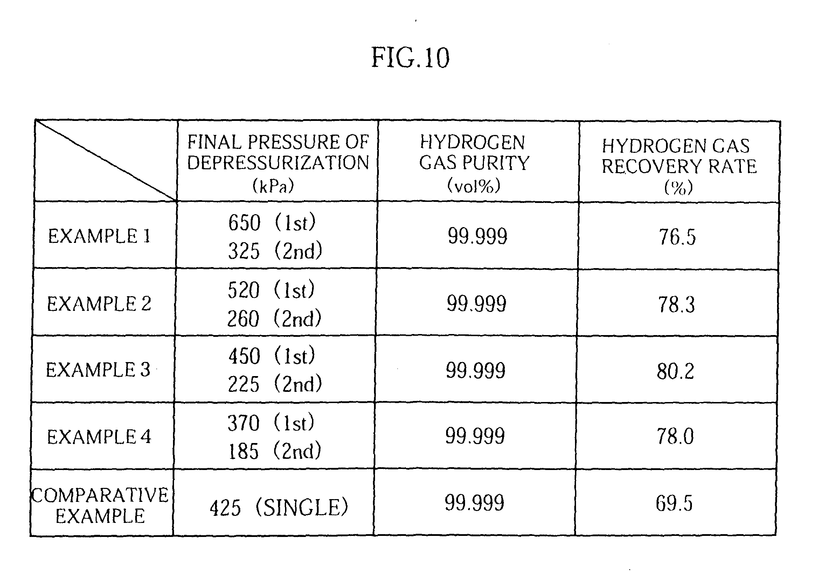

According to the method pertaining to this example, it was possible to obtain hydrogen gas with a purity of 99.999vol% at a recovery rate of 76.5%. These results are listed in the table in Fig. 10, together with the final pressure values in the first and second pressure reduction steps.

### [Example 2]

In this example, the final pressure in the first pressure reduction step was set at 520kPa (gauge pressure) instead of 650kPa, and the final pressure in the second pressure reduction step was set at 260kPa (gauge pressure) instead of 325kPa. Otherwise, hydrogen gas was separated from the gas mixture in a similar manner to the first example.

According to the method pertaining to this example, it was possible to obtain hydrogen gas with a purity of 99.999vol% at a recovery rate of 78.3%. These results are listed in the table in Fig. 10, together with the final pressure values in the first and second pressure reduction steps.

### [Example 3]

In this example, the final pressure in the first pressure reduction step was set at 450kPa (gauge pressure) instead of 650kPa, and the final pressure in the second pressure reduction step was set at 225kPa (gauge pressure) instead of 325kPa. Otherwise, hydrogen gas was separated from the gas mixture in a similar manner to the first example.

According to the method pertaining to this example, it was possible to obtain hydrogen gas with a purity of 99.999vol% at a recovery rate of 80.2%. These results are listed in the table in Fig. 10, together with the final pressure values in the first and second pressure reduction steps.

### [Example 4]

In this example, the final pressure in the first pressure reduction step was set at 370kPa (gauge pressure) instead of 650kPa, and the final pressure in the second pressure reduction step was set at 185kPa (gauge pressure) instead of 325kPa. Otherwise, hydrogen gas was separated from the gas mixture in a similar manner to the first example.

According to the method pertaining to this example, it was possible to obtain hydrogen gas with a purity of 99.999vol% at a recovery rate of 78.0%. These results are listed in the table in Fig. 10, together with the final pressure values in the first and second pressure reduction steps.

### [Comparative Example]

Hydrogen gas was separated from a gas mixture containing hydrogen by repeating the single cycle comprising the steps shown in Figs. 11A through 13C using the PSA separation device X shown in Fig. 1. In this comparative example, one pressure reduction step was performed on each adsorption column during a single cycle, and the final pressure in this pressure reduction step was set at 425kPa (gauge pressure). Further, product gas led out from the adsorption column during the adsorption step was used as the scrubbing gas for scrubbing an adsorption column, and the gas that is led out from the adsorption column during the pressure reduction step was not used. All other conditions were set similarly to the first example.

According to the method pertaining to this comparative example, it was possible to obtain hydrogen gas with a purity of 99.999vol%, but at a recovery rate of only 69. 5%. These results, and the final pressure value in the pressure reduction step, are listed in the table in Fig. 10.

### [Evaluation]

As can be understood from the table in Fig. 10, according to the methods pertaining to the first through fourth examples, in which a two-stage pressure reduction step (first and second pressure reduction steps) is performed during a single cycle, the scrubbing step is performed by introducing pre-product gas, led out from an adsorption column in the first pressure reduction step, into another adsorption column as a scrubbing gas to scrub the other adsorption column, and the repressurizing step is performed by introducing pre-product gas, led out from an adsorption column in the second pressure reduction step, into another adsorption column as repressurizing gas to raise the pressure of the other adsorption column, the hydrogen gas recovery rate is improved greatly in comparison with the method pertaining to the comparative example, in which the pressure reduction step is performed in only a single stage during a single cycle, and product gas is used for all of the scrubbing gas.

Further, comparing the first through fourth examples, it can be learned that the hydrogen gas recovery rate varies according to the balance between the amount of pre-product gas used for scrubbing and the amount of pre-product gas used for repressurization. The method of the third example has the best hydrogen gas recovery rate.

## Claims

1. A method of separating a target gas from a gas mixture using a plurality of adsorption columns packed with an adsorbent, the method comprising repeating a cycle for each of the adsorption columns, the cycle comprising:
an adsorption step in which said gas mixture is introduced into one selected adsorption column, an unnecessary component contained in said gas mixture is adsorbed into said adsorbent, and a product gas enriched with said target gas is led out from said adsorption column;
a first pressure reduction step for lowering the internal pressure of said adsorption column to a first intermediate pressure by leading out a first led-out gas;
a second pressure reduction step for lowering the internal pressure of said adsorption column even further to a second intermediate pressure by leading out a second led-out gas;
a desorption step for desorbing at least a part of said unnecessary component from said adsorbent and purging said unnecessary component;
a scrubbing step for introducing a scrubbing gas into said adsorption column and purging a purge gas from said adsorption column; and
a repressurizing step for raising the internal pressure of said adsorption column by introducing a repressurizing gas into said adsorption column;
wherein said first led-out gas led out from said adsorption column during said first pressure reduction step is introduced as said scrubbing gas into an adsorption column in which said scrubbing step is underway, and said second led-out gas led out from said adsorption column during said second pressure reduction step being introduced as said repressurizing gas into an adsorption column in which said repressurizing step is underway.

2. The target gas separation method according to claim 1, wherein said single cycle comprises an additional repressurizing step, performed after said repressurizing step, for raising the internal pressure of said adsorption column even further by introducing an additional repressurizing gas into said adsorption column,
a part of said product gas led out from the adsorption column in which said adsorption step is underway being introduced as said additional repressurizing gas into the adsorption column in which said additional repressurizing step is underway.

3. The target gas separation method according to claim 1, wherein said single cycle comprises an additional scrubbing step, performed after said scrubbing step, for introducing an additional scrubbing gas into said adsorption column and purging said purge gas from said adsorption column,
a part of said product gas led out from the adsorption column in which said adsorption step is underway being introduced as said additional scrubbing gas into the adsorption column in which said additional scrubbing step is underway.

4. The target gas separation method according to claim 1, wherein when a minimum pressure in said adsorption column during said desorption step is assumed to be 0% while a maximum pressure in said adsorption column during said adsorption step is assumed to be 100%, said first intermediate pressure is within a range of 35 to 80%.

5. The target gas separation method according to claim 4, wherein said second intermediate pressure is within a range of 15 to 50%.

6. The target gas separation method according to claim 1, wherein said gas mixture contains hydrogen gas as said target gas, and carbon dioxide gas as said unnecessary component.
